# EUROPÄISCHE PATENTSCHRIFT

(11) **EP 0 240 821 B1**
(45) Veröffentlichungstag und Bekanntmachung des Hinweises auf die Patenterteilung: **13.01.1993**
(21) Anmeldenummer: 87104223.0
(22) Anmeldetag: 23.03.1987
(51) Int. Cl.: H04Q 7/04, H04B 7/26

(54) **Verfahren zur Übertragung digitaler Signale bei Mobilfunksystemen**
Method for the transmission of digital signals in a mobile radio system
Procédé pour la transmission de signaux numériques dans un système radio mobile

(30) Priorität: 09.04.1986 DE 3611972
(43) Veröffentlichungstag der Anmeldung: 14.10.1987
(73) Patentinhaber: SIEMENS AKTIENGESELLSCHAFT, 80333 München (DE)
(72) Erfinder: Strehl, Herbert, Dipl.-Ing., D-8000 München 70 (DE)

(56) Entgegenhaltungen:
- EP-A- 0 171 525
- DE-A- 2 848 205
- US-A- 3 641 274
- US-A- 4 251 801

## Beschreibung

Die Erfindung bezieht sich auf ein Verfahren zur Übertragung digitaler Signale bei Mobilfunksystemen mit Fest- und Mobilstationen, mit einem Zeitschlitzraster, in dem Nachrichtentelegramme über in multiplexer Anordnung gestaffelte Signalkanäle (Burst) übertragen werden und bei dem gemäß der älteren EP-Anmeldung 0 236 968 A2 (publiziert 16.9.87) von der Feststation für jede Mobilstation eine Information zur Regelung der Burstphase mitübertragen wird, die für jeden Burst der Mobilstation die erforderliche Phasenlage in bezug auf den von der Feststation gesendeten Rahmen in codierter Form enthält.

Ein Verfahren zur Übertragung digitaler Signale bei Mobilfunksystemen gemäß der vorstehend genannten Art ist in der EP-A-0 171 525 beschrieben. Dabei sind in der Feststation Mittel vorhanden, die den zeitlichen Versatz zwischen dem Zeitrahmen der Feststationen und den Sendezeitrahmen der Mobilstationen messen und einen dem jeweiligen zeitlichen Versatz entsprechenden Korrekturwert zur jeweiligen Mobilstation übertragen. Jede Mobilstation enthält Mittel, ihren Sendezeitrahmen um den jeweiligen Korrekturwert zu verschieben.

Die TDMA-Technik (Time-Devision-Multiple-Access) wurde insbesondere für den Satellitenfunk entwickelt. Bei ihr werden eine Vielzahl von Übertragungskanälen nicht wie bei der FDMA-Technik durch Zuteilung von Sendefrequenzen, sondern durch Zuteilung von Zeitabschnitten gebildet. Dabei müssen die vielen Bodenstationen, die alle unterschiedliche Entfernungen vom Satelliten haben, ihre Signalbursts so absenden, daß sie beim Satellitentransponder in die zugeteilten Zeitlücken treffen. Da sich der Satellit in seiner geostationären Umlaufbahn im Tagesrhythmus leicht bewegt, ist auch nach dem Erstzugriff ein ständiges Nachregeln der Burstphase notwendig. Dies ist beim Satellitenfunk leicht zu machen, weil der Transponder des Satelliten den gesamten Rahmen der von den verschiedenen Bodenstationen gesendeten Bursts nur in einen anderen Frequenzbereich umsetzt und dann zurück auf die Erde sendet. Jede Bodenstation kann so nicht nur die für sie bestimmten Bursts der anderen Bodenstationen, sondern auch ihren eigenen Burst empfangen und dadurch auch in die richtige Lage regeln.

Beim Mobilfunk ist dies nicht möglich, weil die Feststation nicht als Transponder arbeitet, sondern die von den einzelnen Mobilstation gesendeten Signale über das Fernsprechnetz zum anderen Teilnehmer schickt. Für die Mobilstation besteht also nicht wie beim Satellitenfunk die Möglichkeit, die durch die Bewegung des Fahrzeugs verursachte Abweichung der richtigen Burstlage festzustellen. Der Laufzeitunterschied kann dabei, je nach Abstand der Mobilstationen von der Feststation, erhebliche Werte annehmen.

Das vorstehend geschilderte Problem wird gemäß der älteren EP-Anmeldung 0 236 968 A2 in der Weise gelöst, daß von der Feststation für jede Mobilstation eine Information zur Regelung der Burstphase mitübertragen wird, die für jeden Burst der Mobilstation die erforderliche Phasenlage in bezug auf den von der Feststation gesendeten Rahmen in codierter Form enthält.

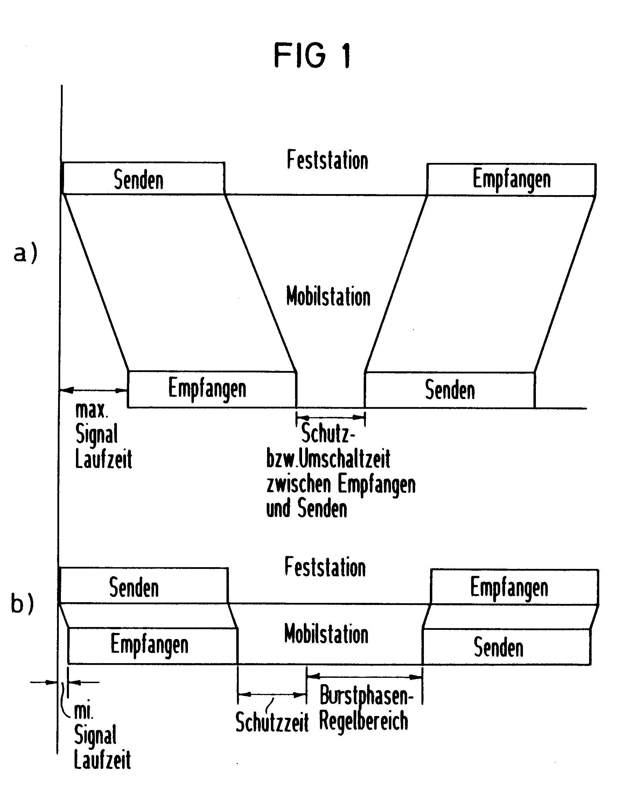

Mit einer solchen Burst-Phasen-Regelung wird erreicht, daß die Schutzzeit zwischen den einzelnen Bursts eines Rahmens wesentlich verringert werden kann, was zu einer deutlich besseren Ausnutzung der Übertragungskapazität führt. Nach diesem Verfahren wird mit jedem Burst in Richtung Mobilstation eine Information zur Regelung der Burstphase mitübertragen, so daß trotz veränderlicher Funkausbreitungszeit der Burst der Mobilstation in die vorgesehene Lücke des Empfangsrahmens der Feststation trifft. Dies ist in einer grafischen Darstellung in Figur 1 wiedergegeben. Dabei ist im oberen Diagramm a das Zusammenwirken von Feststation (obere Reihe) und Mobilstation (untere Reihe) für eine maximale Signallaufzeit wiedergegeben, im unteren Diagramm b für eine minimale Signallaufzeit. Da sich aber die Funkausbreitungszeit durch das Durchfahren von Funkschatten - das Signal läuft dann über weit entfernte Reflexionen- sehr schnell ändern kann, muß immer noch eine, wenn auch kleine Schutzzeit vorgesehen werden, weil die Regelgröße für die Burstphase der Mobilstation immer erst mit dem nächsten Burst, d.h. nach einer Rahmenlänge mitgeteilt werden kann und sich inzwischen die Laufzeit des Funksignals geändert hat. Diese Schutzzeit ist in der Darstellung von Figur 1 eingetragen.

Der Erfindung liegt die Aufgabe zugrunde, den Gegenstand der EP-Anmeldung 0 236 968 A2 dahingehend zu verbessern, daß eine weitere Verringerung der Schutzzeit erreicht wird.

Diese Aufgabe wird gemäß der Erfindung in der Weise gelöst, daß die aus der von der Feststation zur Mobilstation mitübertragenen Information gewonnene Regelgröße mit der abgespeicherten Regelgröße der oder des vorangegangenen Burst in der Mobilstation verglichen und daraus die Änderungsgeschwindigkeit der Laufzeit errechnet wird, und die wiederum abgespeicherte Regelgröße eine prädiktive Korrekturgröße für die jeweils nächste zur Mobilstation mitübertragene Regelinformation liefert.

In vorteilhafter Ausgestaltung des Erfindungsgegenstandes ist vorgesehen, daß die Prädiktion aus jeweils zwei aufeinanderfolgenden Meßwerten erfolgt, wobei nur die Steigung der Laufzeitschwankung zur Prädiktion verwendet wird.

Eine verbesserte Errechnung wird dadurch erreicht, daß die prädiktive Korrekturgröße mit drei aufeinanderfolgenden Meßwerten berechnet wird, wobei auch die Krümmung der Laufzeitschwankungskurve in die Prädiktion eingeht.

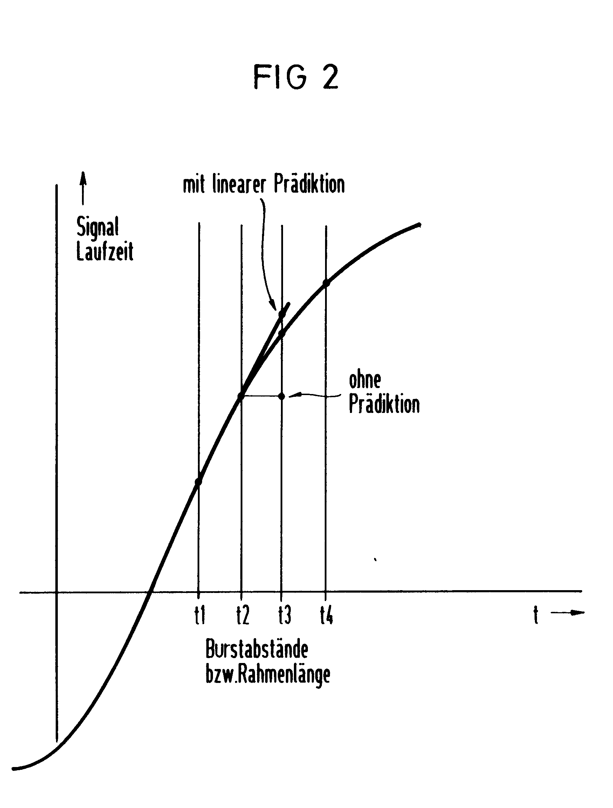

Der weiteren Erläuterung des Erfindungsgegenstandes dient eine grafische Darstellung nach Figur 2, in der die Signallaufzeit über der Zeit t aufgetragen ist. Die Kurve zeigt dabei einen leicht gekrümmten Verlauf. Die Abstände auf der Zeitachse stellen die Burstabstände bzw. die Rahmenlänge dar. In der Figur ist der Fall bezeichnet, in dem keine Prädiktion stattfindet (waagerechter Abstand vom Zeitpunkt t2 nach t3) und der Fall mit linearer Prädiktion (Schnittpunkt der Tangente an die Signallaufzeitkurve) zum Zeitpunkt t2 mit einer Zeitlinie beim Zeitpunkt t3, wobei also die Steigung der Laufzeitschwankung zur Prädiktion verwendet wird.

## Patentansprüche

1. Verfahren zur Übertragung digitaler Signale bei Mobilfunksystemen mit Fest- und Mobilstationen, mit einem Zeitschlitzraster, in dem Nachrichtentelegramme über in multiplexer Anordnung gestaffelte Signalkanäle (Burst) übertragen werden, und bei dem von der Feststation für jede Mobilstation eine Information zur Regelung der Burstphase mitübertragen wird, die für jeden Burst der Mobilstation die erforderliche Phasenlage in bezug auf den von der Feststation gesendeten Rahmen in codierter Form enthält,
**dadurch gekennzeichnet,**
daß die aus der von der Feststation zur Mobilstation mitübertragenen Information gewonnene Regelgröße mit der abgespeicherten Regelgröße der oder des vorangegangenen Bursts in der Mobilstation verglichen und daraus die Änderungsgeschwindigkeit der Laufzeit errechnet wird, und diese wiederum abgespeicherte Regelgröße eine prädiktive Korrekturgröße für die jeweils zur Mobilstation mitübertragene nächste Regelinformation liefert.

2. Verfahren nach Anspruch 1,
**dadurch gekennzeichnet**,
daß die Prädiktion aus jeweils zwei aufeinanderfolgenden Meßwerten erfolgt bei Verwendung der Steigung der Laufzeitschwankung.

3. Verfahren nach Anspruch 1,
**dadurch gekennzeichnet,**
daß die Berechnung der prädiktiven Korrekturgröße durch Berücksichtigung der Krümmung der Laufzeitschwankungskurve mit drei aufeinanderfolgenden Meßwerten erfolgt.

## Claims

1. Method for transmitting digital signals in mobile radio systems comprising base stations and mobile stations, having a time-slot pattern in which information messages are transmitted via signal channels sequenced in a multiplex arrangement (burst), and in which an information item for controlling the burst phase is also transmitted for each mobile station from the base station, which information item contains the required phase relationship with respect to the frame sent by the base station in coded form for each burst of the mobile station, characterised in that the controlled variable obtained from the information item also transmitted from the base station to the mobile station is compared with the stored controlled variable of the preceding burst or bursts in the mobile station, and from this the rate of change of the transit time is calculated, and this controlled variable, which is again stored, supplies a predictive correction variable for the next control information item in each case also transmitted to the mobile station.

2. Method according to Claim 1, characterised in that the prediction is made from in each case two successive measurement values using the slope of the transit-time fluctuation.

3. Method according to Claim 1, characterised in that the predictive correction variable is calculated by taking into consideration the curvature of the transit-time fluctuation curve with three successive measurement values.

## Revendications

1. Procédé pour la transmission de signaux numériques dans des systèmes radioélectriques mobiles comportant des postes fixes et des postes mobiles, avec une trame de créneaux temporels dans laquelle des télégrammes d'informations sont transmis par l'intermédiaire de canaux de signaux (rafale) échelonnés selon une disposition multiplexée, et selon lequel le poste fixe transmet simultanément, pour chaque poste mobile, une information pour le réglage de la phase de la rafale qui contient sous forme codée, pour chaque rafale du poste mobile, la position de phase nécessaire par rapport à la trame émise par le poste fixe,
caractérisé par le fait que la grandeur de réglage obtenue à partir de l'information transmise simultanément par le poste fixe au poste mobile, est comparée à la grandeur de réglage mémorisée du ou des rafales précédentes dans le poste mobile et que la vitesse de modification du temps de propagation est calculée à partir de là, et que cette grandeur de réglage, à nouveau mémorisée, fournit une grandeur de correction prédictive pour l'information de réglage immédiatement suivante, transmise simultanément au poste mobile.

2. Procédé suivant la revendication 1, caractérisé par le fait que la prédiction s'effectue respectivement à partir de deux valeurs de mesure successives, dans le cas de l'utilisation de la pente de la variation du temps de propagation.

3. Procédé suivant la revendication 1, caractérisé par le fait que le calcul de la grandeur de correction prédictive s'effectue en tenant compte de la courbure de la courbe de variation du temps de propagation avec trois valeurs de mesure successives.
